(19) **Europäisches Patentamt**

**European Patent Office**

**Office européen des brevets**

(11) **EP 1 023 485 B1**

(12) **EUROPEAN PATENT SPECIFICATION**

(45) Date of publication and mention
of the grant of the patent:
**29.12.2004   Bulletin 2004/53**

(51) Int Cl.⁷: **D06N 7/00**, A47G 27/04

(21) Application number: **98953403.7**

(86) International application number:
**PCT/US1998/021487**

(22) Date of filing: **13.10.1998**

(87) International publication number:
**WO 1999/019557 (22.04.1999 Gazette 1999/16)**

(54) **FLOOR COVERING WITH WOVEN FACE**

BODENBELAG MIT GEWEBTEM OBERMATERIAL

REVETEMENT DE SOL A SURFACE TISSEE

(84) Designated Contracting States:
**AT BE CH CY DE DK ES FI FR GB GR IE IT LI LU
MC NL PT SE**

(30) Priority: **14.10.1997   US 62085 P
04.06.1998   US 87991 P**

(43) Date of publication of application:
**02.08.2000   Bulletin 2000/31**

(73) Proprietor: **INTERFACE, INC.
Atlanta, Georgia 30339 (US)**

(72) Inventors:
 • **SCOTT, Graham
   LaGrange, GA 30240 (US)**
 • **OAKEY, David, D.
   LaGrange, GA 30240 (US)**
 • **BRADFORD, John
   LaGrange, GA 30240 (US)**
 • **WATERS, Liam
   LaGrange, GA 30240 (US)**
 • **GRAY, Keith
   Kennesaw, GA 30144 (US)**

(74) Representative: **Hammler, Martin Franz et al
Phillips & Leigh
5 Pemberton Row
London EC4A 3BA (GB)**

(56) References cited:
**WO-A-90/14107          WO-A-93/08325
WO-A-95/23691          DE-A- 1 635 484
DE-U- 9 218 998          DE-U- 9 416 152
DE-U- 29 600 724        US-A- 2 622 998
US-A- 2 752 277**

## EP 1 023 485 B1

### Description

### Field of the Invention

This invention relates to floor coverings, including carpet and carpet tile and resilient sheet and tile products such as vinyl flooring.

### Background of the Invention

A few prior flooring products have used woven "flat" fabrics as a top layer with limited success, such as:-

Document DE 196 00 724 discloses a flooring product having a "wear layer" on top that is a flat woven or knitted fabric;
Document DE-U-94 16 152 (Koch) discloses matting having a working layer of hard natural fibers, and a flexible natural fiber underlay, stuck to the working layer by natural latex. Cotton fiber reinforcement may be provided to stabilize the underlay;
Document DE-A-1 635 484 (Delden) a floor covering comprising fabric made on a conventional flat loom and connected to a backing layer. The threads in the fabric are secured against movement by mechanical treatment such as needling, or chemical treatment;
Document WO 95/23691 (Milliken) discloses a reinforcement or substrate layer 138, 158 of fiberglass material directly or indirectly bonded to carpet fabric 120, 134..

Furthermore, historically, virtually all prior carpet and rug products have been manufactured with concern principally for cost, aesthetics and performance, and with little or no concern for the resources required to provide such components or the destination or reuse of the components after the product is removed from service.

### Summary of Background

Notwithstanding the long history of carpet and rug production and variety of other existing flooring alternatives, there remains a need for flooring material that exhibits some of the characteristics of carpet and carpet tile, like design versatility, but that shares other characteristics of entirely different floorings. As compared, in particular, to conventional carpet, there is likewise a growing need for flooring structures that minimize the quantity of materials (and therefore natural resources) needed. Finally, it is also desirable to create flooring structures that can exploit fully the sophisticated computer controlled fabric-producing technologies that have recently become available.

To summarize, there exists a need for a new flooring material that:

- is easily and quickly cleaned
- requires low maintenance
- does not telegraph floor irregularities
- is resistant to damage by stiletto heels
- utilizes less energy to produce
- is durable
- easily accommodates wheeled traffic
- is economical to produce
- is recyclable
- is sufficiently hard to resist rapid and extensive deformation by concentrated loads such as those exerted by desk legs and other heavy furniture
- is very attractive
- is slip resistant
- is wet moppable
- has sound dampening qualities superior to conventional hard surface floors
- hides sub-floor defects
- is impervious to water penetration
- resists stains and facilitates stain removal
- accommodates wide-ranging and colorful design
- is self-sanitizing, inhibiting microbial growth.

## Summary of the Invention

According to the present invention, a floor covering has a woven fabric top layer, a resilient layer positioned below the fabric top layer and an additional layer between the fabric top layer and the resilient layer; wherein the floor covering is a dimensionally stable composite having a stabilizing layer bonded between the woven fabric top layer and the resilient layer and the material for the stabilizing layer is selected from the group comprising fiberglass; non-woven fiberglass fleece; ceramic fibers, polyester, a PET/polyester blend or a PET/nylon blend; glass, polypropylene, nylon.

Further embodiments of floor covering in accordance with the present invention are set forth in appended claims 2 to 20.

Also in accordance with the present invention, a method of manufacturing a floor covering having a woven fabric top layer, a resilient layer positioned below the fabric top layer and an additional layer between the fabric top layer and the resilient layer comprises the steps of:-

   i) bonding a stabilizing layer onto the resilient layer;
   ii) bonding the woven fabric top layer to the stabilizing layer;
   and,
   iii) timing step ii) relative to step i) so that the composite of woven fabric top layer, stabilizing layer and resilient layer is dimensionally stable.

Further embodiments of the method of the present invention are set forth in appended claims 22 to 30.

The preferred methods and structures of this invention provide high quality flooring that utilizes sophisticated, self-stabilizing, woven face fabric using relatively heavy "carpet weight" nylon, polyester, PTT or other yarns to produce flat-weave fabrics that are bonded to engineered backing structures. These structures have a relatively small thickness and therefore utilize very modest quantities of yarn with correspondingly modest face weights, but they are very hard wearing. Use of such a woven fabric in flooring and flooring tile permits production of flooring having sophisticated multi-color designs not previously available in any carpet or flooring product, conserves natural resources used for forming fiber, permits production of new flooring designs quickly and, if desired, in small production quantities, and provides flooring and flooring tile that is extremely attractive, relatively inexpensive, and easy to clean, maintain and recycle. Moreover, the woven fabric of the flooring of this invention exhibits more "give" and is therefore more comfortable under foot than conventional "hard" surface flooring materials, but at the same time presents a less deformable surface than a typical carpet structure with upstanding yarn ends or loops. Desired deformation characteristics and "feel" under foot may be achieved utilizing foam, composite and other backing structures together with various yarn and weave combinations.

Important among the alternative backing structures and components described below are use of urethane modified bitumen as a backing layer, use of an optional latex precoat on the fabric layer, and incorporation of an optional antimicrobial in the precoat.

## Brief Description of the Drawings

**The above and other features of the present invention are illustrated, by way of example, the Drawings; wherein:-**

   Fig. 1 is a schematic side elevation view of roll goods or modular flooring constructed in accordance with this invention.
   Fig. 2 is a schematic side elevation view illustrating one method of production of the flooring illustrated in Fig. 1.
   Fig. 3 is a perspective view of an alternative flooring tile or section of flooring in accordance with this invention.
   Fig. 4 is a schematic side elevation view of an alternative flooring laminating line for practicing this invention.
   Fig. 5 is a schematic side elevation view of a second alternative flooring laminating line for practicing this invention.
   Fig. 6 is a schematic side elevation view of a third alternative flooring laminating line for practicing this invention.
   Fig. 7 is a cross-section of flooring of this invention manufactured as illustrated in Fig. 5.

## Detailed Description of the Drawings

### I. Flooring Structure

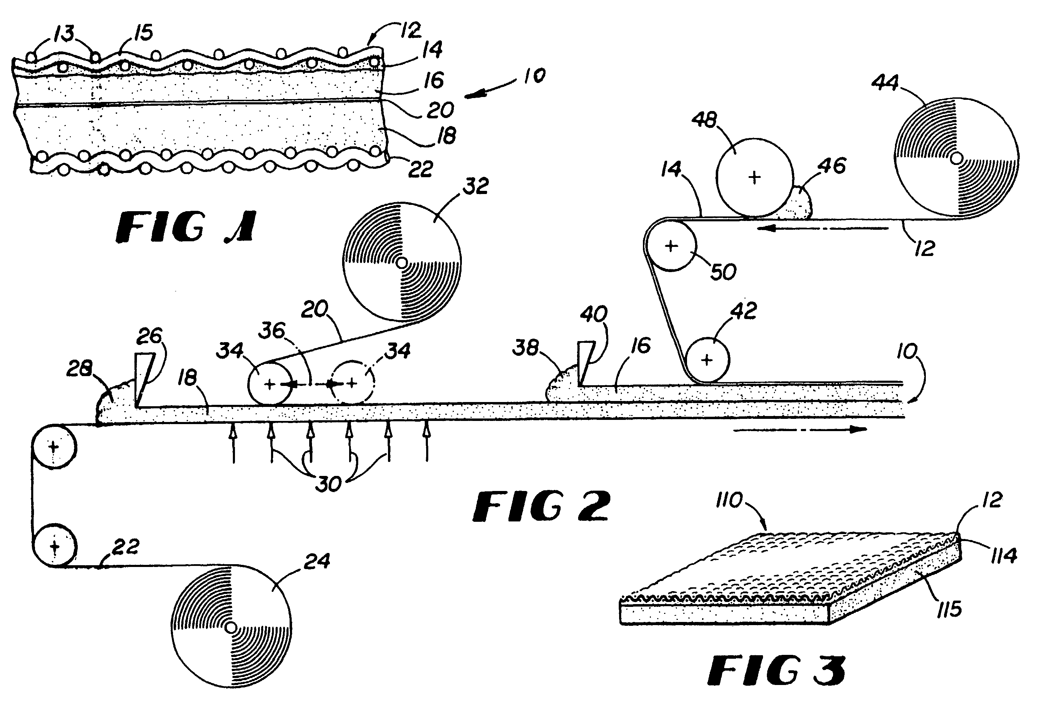

Fig. 1 is a side elevation, schematic view of one embodiment of roll goods or modular flooring 10 constructed in accordance with this invention. Flooring 10 has a top layer of woven fabric 12 that includes yarns 13 and 15. A precoat 14 is applied to the underside of fabric top layer 12. Bonded to precoat 14 and fabric top layer 12 is a backing

layer 16. A resilient layer 18 lies under backing layer 16, and a web of reinforcement material 20 is positioned between backing layer 16 and resilient layer 18. Finally, the bottom-most layer is a backing fabric 22.

**II. Flooring Production**

Fig. 2 is a schematic side elevation view illustrating one method of production of flooring 10. Beginning at the left side of Fig. 2, fabric backing 22 unrolls from a roll 24 and passes under a doctor blade 26 or other metering device that meters a desired thickness of urethane foam 28 or other material onto backing 22 to form a resilient layer 18 on top of fabric backing 22. Heat, indicated by arrows 30, may be applied to the underside of the advancing web of backing 22 and resilient layer 18 to accelerate curing of resilient layer 18. A web of reinforcement 20 is unrolled from roll 32 and passes around a roller 34 which presses the reinforcement web 22 into contact with the upper surface of resilient layer 18 so that it will be bonded to resilient layer 18. As is indicated by arrow 36, roll 34 may be positioned as desired nearer or further from doctor blade 26, so that reinforcement web 20 may be married to resilient layer 18 in a position selected by reference to the stage of curing of resilient layer 18 that has been achieved.

The advancing composite web of backing 22, resilient layer 18 and reinforcement web 20 then passes under a liquid puddle 38 and a doctor blade 40 or other appropriate metering device to apply a uniform backing layer 16 of urethane modified bitumen or other material that then passes under a press roller 42 together with reinforcement web 20, resilient layer 18 and backing 22.

Meanwhile or earlier, woven fabric 12 unrolls from a roll 44 of woven fabric 12 and passes under a puddle 46 of precoat 14 that is metered by metering roll 48 to deposit a thin layer of precoat 14 on woven fabric 12, which then passes around turn roller 50 and press roller 42. Press roller 42 presses precoat 14 and fabric 12 against the top of backing layer 16 to form flooring 10.

Each of woven fabric 12, precoat 14, backing layer 16, resilient layer 18, reinforcement web 20 and backing fabric 22 are described below in detail.

**III. Flooring Components**

**A. Woven Fabric**

**1. Yarn**

Woven fabric 12 may be produced from numerous yarns 13 and 15 and combinations of yarns, including, among others, polypropylene, nylon and polyester. Suitable polyesters include the poly(alkylene terephthalates) and poly(alkylene 2,6-naphthalene-dicarboxylates) discussed above. Yarns used should be very durable and range in size from approximately 600 denier to 3600 denier (total yarn denier) with low denier per filament (e.g., on the order of 20 denier per filament, although denier per filament may range between about 8 and 80). Yarns of higher than 3600 denier may also be used in the weft when desired. Significantly, the yarns used in the flooring of the present invention are typically thought of as "carpet-weight" yarns, although they are used in looms normally used in weaving the lighter yarns conventionally used in computer-controlled jacquard looms for production of upholstery, drapery and other lighter weight fabrics.

Preferred warp yarns are approximately 600 denier and preferred weft or fill yarns are approximately 2400 denier. One preferred yarn may be manufactured of Shell Oil Company Corterra® PTT polymer, which is extensively described at the following address: http://www.shellchemicals.com/CMM/WEB/GLOBCHEM.NSF/Products/CORTERRA. However, yarns made from other polyesters described above can also be used, including, e.g., PET, PBT, PDCT, PEN, PBN, PLA, and mixtures of these fibers with each other and with other polyester and non-polyester fibers.

Although both warp and fill yarns may be any color, successful edge-to-edge seams during carpet installation may be more successful when the warp yarns are a darker color than the fill yarns.

Considerations relevant to selection of yarns in conventional carpet are relevant in selection of yarn for woven fabric 12, although some properties have dramatically different significance. For instance, resilience, the ability to regain shape after crushing, is of substantial importance in conventional pile-type carpet with upstanding yarn, but is far less important in woven fabric 12 since the yarns in fabric 12 lie substantially parallel to the floor. Conversely, longitudinal stability with changes in humidity, moisture and temperature are relatively unimportant in yarn forming carpet pile, but such stability can be quite significant in woven fabric 12 because changes in yarn length can easily influence the size of woven fabric 12. Nylon is a yarn used in many conventional carpet products because it is highly resilient. Although nylon is relatively unstable dimensionally, that is of little concern in conventional carpet. It is easily stained, however, which is an unattractive attribute in any flooring or floor covering application. By contrast, polyester is less prone to staining than nylon, less resilient and more stable. PTT fibers, in particular, are easily dyed at atmospheric boil, yet resist staining by acidic dyes and hot disperse dyes.

A wide variety of polyesters, nylons, and polyolefins can be used in the present invention. Yarns spun from Corterra® PTT polymer have been found to be particularly suitable because of their combination of desirable physical properties, dyeability, and resistance to staining. PTT fibers produced by other manufacturers, or using different PTT formulations, would also be very suitable for the present invention. Properties of exemplary yarns suitable for the present invention are provided below in Table 1. However, yarns having different properties, and in particular yarns having higher or lower degrees of orientation, tenacity, elongation, and modulus, may also be used in the present invention.

TABLE 1.

| PROPERTIES FOR POLYESTER FIBERS SUITABLE FOR INVENTION | | |
|---|---|---|
| PROPERTY | MATERIAL | |
| | NYLON | PTT |
| FIBER PROPERTIES | | |
| Orientation | Medium | Medium |
| | | |
| Tenacity | 2.5-3.0 g/den | 1.8 - 2.0 g/den |
| | | |
| Elongation | 35-55% | 35-55% |
| | | |
| Modulus | 12.5 g/den | 6 g/den |
| | | |
| Evenness | < 1.0 | <1.0 |
| | | |
| Dye uptake | Good at atmospheric boil | Good at atmospheric boil |
| | | |
| Exemplary manufacturer and trade names | NYLON 6; NYLON 66 | CORTERRA (Shell) |

### 2. Weaving Equipment and Weaving Patterns

A variety of looms known to those skilled in the art of weaving may be used to weave fabric 12, including looms that employ shuttles to carry the weft yarn across the full fabric width and needle insertion looms that use a needle to carry the weft yarn half way and pass it to a second needle inserted from the other side.

A particular loom usable for practice of the this invention is Dornier Weaving Machine Model HTVS8/J available from Lindauer Dornier GmbH, Rickenbacher Strasse 119, Lindau, Germany. Such a loom may be used with a Staubli CX 880/2688 electronic Jacquard weaving machine and harness available from Staubli Corporation, Duncan, South Carolina. This equipment permits extremely sophisticated designs to be woven, including designs requiring numerous weft yarn colors and frequent weft yarn color changes.

Sophisticated patterns possible on such looms include patterns that have the appearance of depth and of sculptured or three dimensional structures in an essentially flat product. Such patterns are possible, in part, because a wide variety of different colors of fill yarn are usable under control of the loom computer. Color selection may be made from a multi-colored weft bank, containing up to sixteen or more colors, as contrasted with conventional carpet and rug production, in which color selection or insertion comes from warp yarns. Because the weave is essentially flat, planar stability and integrity is provided by the face fabric 12, thereby eliminating the need for: (a) a primary backing fabric or woven backing structure, as is typically required in conventional carpet and rug constructions or (b) the paper or other backing typically utilized in vinyl sheet flooring.

Extremely sophisticated designs may be achieved by using a "tapestry warp." In one example of such a warp, 6,176 warp yarn ends are yellow, green, red, and blue, one color after another across the entire warp (e. g., a first warp yarn is yellow, the next is green, the next red, the next blue, the next yellow, and so on, repeating these four colors across the entire warp). With these warp colors, white fill yarns can be used to "shade" the warp colors lighter, and black fill yarns can be used to "shade" the warp colors darker. Any of the four warp colors can be used to "tie down" the fill yarns, making that warp yarn visible. Not unlike the three colors used in a television picture tube'to create all desired colors, the warp yarns can be thought of as available "pixels" of shadable and mixable color. Colored fill yarns can also be used in addition to black and white fill yarns. The availability of shadable and mixable warp yarn colors and multiple fill yarn colors makes possible enormously varied and sophisticated designs and patterns not previously available in carpet or other conventional floor coverings.

Non-matchable patterns are sometimes desired and may be produced, making it possible to juxtaposition pieces of flooring 10 (cut roll goods or tiles or modules) cut at any point in the flooring without the need to move the juxtaposed pieces relative to each other to achieve an aesthetically pleasing appearance.

### 3. Edge Conditions

Where flooring 10 is cut into flooring tiles, such as eighteen inch or one-half meter squares, or where an edge of flooring 10 is exposed for some other reason, the appearance and condition of the edge can be important. In particular, it is important under such circumstances for individual yarns not to blossom and for woven yarns to maintain their positions and not "ravel" or otherwise become unsightly.

Several approaches may be utilized to avoid such "edge ravel." For instance, a variety of adhesive and other materials may be applied to the yarns before weaving or to the woven fabric 12 or flooring 10 to bond yarns together. The yarns may also be chemically or thermally melted to cause adjacent yarns or portions of adjacent yarns to fuse. If different yarns are used in the same woven fabric 12 that have different melting temperatures, a controlled heat source that raises woven fabric 12 above the melting point of one or more but not all yarns in fabric 12 may be used selectively to melt or partially melt and bond the lower melting temperature yarns without melting the higher melting temperature yarn.

Similarly, fabric 12 can use bi-component fibers or yarns having different materials in a core and sheath, or having two different materials that are co-extruded to produce a yarn having different materials side-by-side. If the two yarn components have different melting points, elevation of the temperature to a temperature above the melting point of one component but below the melting point of the other component will fuse melted material in adjacent yarns, thereby stabilizing yarn positions, without unduly affecting the structure of fabric 12.

Edge ravel can also be addressed by applying a coating to the edge of the fabric 12 with, for example, a foam applicator so that the fabric edge sealer soaks into fabric 12 to a distance on the order of approximately 6.3mm (1/4 inch) from the edge of fabric 12. The objective is to bind adjacent fiber and yarn ends together and to at least the yarn parallel and closest to the edge. Fabric sealer usable for this coating can be, for instance, water based urethanes such as unsaturated or acrylated urethane polymers and oligomers, polyester urethanes, or polyfunctional acrylate monomers. Polyester urethanes, e.g., those obtained by reacting polycarboxylic acids with diols and acrylic acid to form polyester acrylates, which are then reacted with polyisocyanates, have been found to be suitable. For example, the fabric sealer may contain a polyester urethane (Stahl RU41 R065, 87% by weight), an optional crosslinker (Stahl XR2500 polyfunctional aziridine, 4% by weight) and water (9% by weight). The inclusion of a crosslinker can materially decrease the drying time of the sealer.

A seam sealer such as Interface Seam Sealer 90 can be applied between adjacent edges of the backing structure to provide a water-tight seal therebetween.

### 4. Dimensional Stability

Although the woven fabric 12 of flooring 10 presents some advantages in stability as compared to some prior fabric materials used in flooring, fabric 12 is nevertheless somewhat unstable with changes in environmental conditions. Sources of instability include the yarn 13 and 15 from which fabric 12 is made and the weave. Instability associated with these factors can manifest itself in upcurled edges or overall shrinkage of fabric 12 (for instance, a square piece of fabric 12 can become rectangular instead of square because of shrinkage). This is the reason the backing design is critical. Flooring 10, particularly in the form of a tile or module, must be able to lie flat on the floor and not shrink enough to break seams in a broadloom product or cause gapping in a tile product.

Flooring 10 that will lie flat on the floor can be produced by utilizing reinforcement layer 20 as a "no-slip" or "zero-slip" layer. This is possible if reinforcement layer 20 is a layer of fiberglass as described below, because such fiberglass is extremely stable, particularly in comparison to the other components of flooring 10.

Dimensional stability is provided by placing reinforcing fiberglass into a suitable backing layer in a way that balances the rate of change of "upcurl strain," or $e_u$, with the rate of change of "doming strain," $e_d$, as atmospheric conditions, such as temperature and humidity, change with time. Upcurl strain is the displacement of the edges of the floor covering material upward, and is caused by a contraction of the floor covering material in the upper part of the material resulting from a tensile force. Doming strain is the displacement of the edges of the floor covering material downward (resulting in an upward displacement of the more central portions of the floor covering material into a dome-like shape). It is also the result of a tensile force contracting a portion of the floor covering material, however the doming force operates on the lower portions of the material.

The rate of change of upcurl strain of the composite material with changing atmospheric conditions can be described by the following equation:

$$\frac{de_u}{dAC} = \frac{d}{dAC}\left[\frac{T_u}{(A_a * E_a)}\right]$$

where $e_u$ is the upcurl strain, AC signifies atmospheric conditions, $T_u$ is the tensioning force causing the upcurl, $A_a$ is the area above layer 20, and $E_a$ is the elastic modulus of the backing material above layer 20.

The rate of change of doming strain of the composite material with changing atmospheric conditions can be described by the following equation:

$$\frac{De_d}{dAC} = \frac{d}{dAC}\left[\frac{T_d}{(A_b * E_b)}\right]$$

where $e_d$ is the doming strain, AC is as defined above, $T_d$ is the tensioning force causing the doming, $A_b$ is the area below the layer 20, and $E_b$ is the elastic modulus of the material below layer 20.

The heat shrinkage properties of material below layer 20, e.g., polypropylene, can be used to offset the shrinkage of the fabric above layer 20. In other words, by placing the appropriate material below layer 20 at the appropriate time in the production process, the rate of change of $A_b$ can be decreased, thereby increasing the rate of change of the doming strain. When the rate of change of the doming strain is maintained at a level at or above the rate of change of upcurl strain, the resulting material is dimensionally stable, and can withstand normal atmospheric changes. Utilizing nylon for yarns 13 and 15, it may be impossible to maintain this relationship in all environmental conditions encountered in a typical location where flooring 10 is used. However, it may be possible to maintain this relationship in all environmental conditions using PTT for yarns 13 and 15.

With the equations set forth above in mind, it is possible to use the tendency of polypropylene in fabric backing 22 (below layer 20) to shrink in the presence of heat to offset the propensity of fabric 12 (above layer 20) to shrink. By choosing the fabric backing 22 carefully and placing the layer 20 in the composite structure 10 at the right time during the manufacturing process, it is possible offset the shrinkage tendency in the fabric 12. For example, fabric backing 22, which may be made of a woven heat-shrinkable polyolefin, can be placed first, and covered with a polyurethane foam. The exothermic heat of reaction of the isocyanate and the polyol heat the polyolefin, causing some shrinkage to occur. By placing the layer 20 onto the polyurethane foam at the appropriate time, the shrinkage of the polyolefin can be effectively "frozen" and balanced against the forces imposed on the composite by the materials added "above" the layer 20. The determination of the appropriate time for adding the layer 20 can be determined empirically by varying the time of application of layer 20 (which should be understood to include varying the point in the production process at which layer 20 is applied), assembling the composites, and testing them under varying atmospheric conditions for dimensional stability, e.g. by measuring the change in area and/or the net upcurl or doming force or strain experienced by the composite. Using this method of controlling the assembly of the composite material allows the yarn 13 and 15 in fabric 12 to go through normal physical changes in response to atmospheric changes without being affected enough to cause the entire composite flooring 10 to be dimensionally unstable.

**Example 1-- Woven Fabric**

One woven fabric 12 usable to produce flooring 10 is woven on the above described Dornier loom and Jacquard weaving machine and harness using warp yarn consisting of PTT 10 denier per filament 600 denier yarn. All warp yarn is black to enhance "seamability." Weft or fill yarn is multiple colors of 10 denier per filament 2400 denier nylon, or preferably PTT, yarn. As noted above, more sophisticated aesthetic designs can be achieved using, as an alternative to all black warp yarns, a tapestry warp of yellow, green, red and blue yarns. As also noted above, fill yarns may include white and black yarns as well as colored yarns.

**B. Precoat**

Precoat 14 may serve three or more functions. Precoat 14 may bond yarns within fabric 12 to each other, thereby stabilizing fabric 12 and assisting in preventing edge ravel; it may provide a material to which the material of backing layer 16 bonds more readily than it bonds to fabric 12, and it may serve as a carrier and reservoir for antimicrobial or other materials that are intended migrate into and through fabric 10 as well as for flame retardant materials.

Although precoat 14 may serve as an adhesive to bond fabric 12 to backing layer 16, it may be desirable for the bond to be sufficiently weak that fabric 12 can be stripped off of backing layer 16 in order to recycle the components of flooring 10.

Precoat 14 may be a highly frothed ethylene vinyl acetate or acrylic latex to which is added an antimicrobial such at Intersept® antimicrobial, which is available from Interface Research Corporation, Kennesaw, Georgia and is included at a concentration of approximately slightly less than 7% by weight of the weight of the face yarn fibers of the flooring 10. As an example of the frothing, the mixture may be frothed with a blow ratio of 2.8, which means that the cup weight of the unfrothed mixture is 2.8 times that of the frothed mixture. Precoat 14 may be applied in a very thin layer from which the water evaporates quickly, leaving a precoat layer weighing on the order of approximately 61.0 - 118.7 $g/m^2$ (dry weight) (1.8 - 3.5 ounces per square yard of flooring 10), and preferably approximately 61.0 $g/m^2$ (1.8 ounces per square yard). The following Example 2 sets forth a usable precoat formulation.

**Example 2 -- Precoat**

| Parts per hundred resin (phr) | Component |
| --- | --- |
| 55 | E-190 base latex from National Starch[1] |
| 55 | water |
| 1 | sage (natural foaming agent) |
| 2.2 | Para-Chem 277 thickener[2] |
| 1.5 | Intersept® Antimicrobial[3] |
| 2.2 | Eagle SP-120 (phosphorus/bromine dispersion flame retardant)[4] |

[1]National Starch and Chemical Company, 195 Ottley Drive, N.E., Atlanta, GA 30324.

[2]Para-Chem, Hwy 14 / PO Box 127, Simpsonville, South Carolina 29681.

[3]Interface Inc., 2589 Paces Ferry Rd., Atlanta, GA 30339. Intersept is a phosphorus/amine containing antimicrobial composition.

[4]Eagle Systems Corporation, P.O. Box 888018, Atlanta, GA 30356.

Precoat 14 is direct coated onto fabric 12 with an overdriven, weighted roll with a roll to web ratio of 1.3 (meaning that the roll surface speed is 1.3 times the surface speed of the web in contact with the roll).

**C. Fabric Stabilizing Layer**

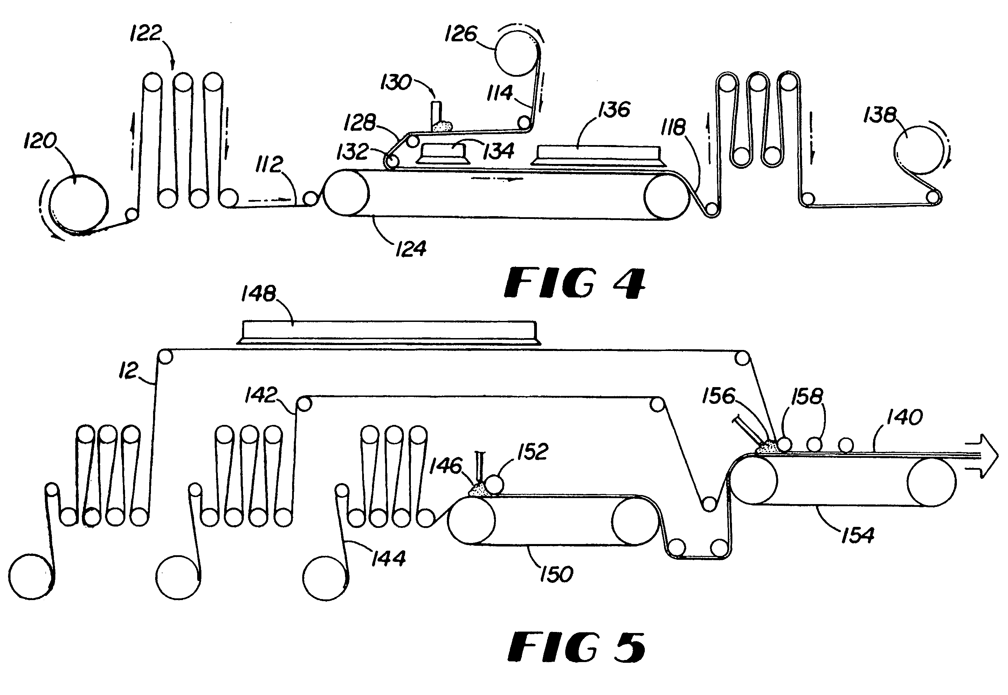

If desired, the fabric top layer 12 may have the stabilizing layer 114, 142 (see Figs. 3 and 7) of fiberglass (such as DURA-GLASS® 7613 non-woven fiberglass fleece sold by Schuller Mats & Reinforcements, P. O. Box 517, Toledo, Ohio 43687-0517) may be bonded to the underside of fabric 12 with precoat 14 or an alternative adhesive material 156.

**D. Backing Layer**

Backing layer 16 may be a wide variety of materials, depending on the properties desired. For instance, in may be any of a wide variety of solid, semisolid, resilient, and foamed plastic and thermoplastic materials, including natural and synthetic rubber, polyvinyl chloride, polyurethane, atactic polypropylene and hot melts, such as low density to high density EVA hot melts, polyethylene and others.

As an alternative to these and other conventional backing materials, backing layer 16 may be a urethane-modified bitumen composition chemically similar to the bitumen including a thermosetting amount of, e.g., a hydroxyl-terminated polybutadienepolyisocyanate urethane polymer disclosed for use as an adhesive in U. S. Patent No. 5,096,764 to Terry *et al.*. While backing layer 16 has adhesive properties in this application, it is utilized not merely as an adhesive but to provide desired weight and other physical properties. Among those properties provided by this urethane modified bitumen composition, it is pliable, can be stretched and has some memory.

Backing layer 16 may be any desired thickness, depending on the service and other requirements of flooring 10. It should typically range in thickness between approximately 0.76 and 1.52 mm (30 to 60 mils), should preferably be between 0.76 and 1.01 mm (30 to 40 mils), and most preferably should be approximately 0.81 mm (32 mils) thick. The weight of backing layer 16 will also vary widely depending on the material chosen and service requirements. Typical weights of backing layer 16, if modified bitumen as described below is used, will range between approximately 339 and 2034 g/m$^2$ (10 to 60 ounces per square yard). A preferred weight is approximately 1085 g/m$^2$ (32 ounces per square yard.)

A usable composition of modified bitumen for layer 14 is described in the following Example 3, which provides the amounts and identity of starting materials combined and reacted to form the urethane-modified bitumen used in the backing of the present invention.

### Example 3 -- Backing Layer

| Component | Preferred number of parts per hundred bitumen | Range in wt% based on final composition |
|---|---|---|
| Propane D Asphalt (Shell bitumen) | 100 | 25-40, more particularly 27-33 |
| Calcium Carbonate | 175 | 45-65, more particularly, 55-65 |
| R45HT Poly BD (Atochem polybutadiene polyol) | 31.95 | 3-20, more particularly 4-16 |
| 143L (Dow Chemical Co. diphenylmethane diisocyanate) | 4.8 | 0.4-3.5, more particularly 0.6-2.4 |

The components may vary by as much as ± 10 pph. The amount of isocyanate added is generally proportional to the amount of polyol used, generally around 15%. The formulation set forth above can be modified by adding a catalyst for the reaction between the polyol and the polyisocyanate, and/or by substituting aluminum trihydrate (ATH) for calcium carbonate up to approximately twenty-five percent (25%) of the calcium carbonate. For instance, a backing layer formed by reacting 100 parts Shell Propane D Asphalt, about 43.75 parts aluminum trihydrate, 131.25 parts calcium carbonate, 32.01 parts R45HT Poly BD, and 4.785 parts Iso 265 diisocyanate would be suitable for use as a backing in the present invention.

### E. Reinforcement Web

Reinforcement web 20 stiffens and stabilizes flooring 10 and may be a number of different materials such as fiberglass, ceramic fibers, polyester, a PET/polyester blend or a PET/nylon blend. Among these alternatives, a preferred material for web 20 is non-woven fiberglass fleece, such as Schuller 7613 fiberglass fleece weighing approximately 44.1 g/m$^2$ (1.3 ounces per square yard).

### F. Resilient Layer

Like backing layer 16, resilient layer 18 may also be a wide variety of materials, depending on the properties desired. For instance, it may be any of a wide variety of solid, semi-solid, resilient, and foamed plastic and thermoplastic materials, including natural and synthetic rubber, polyvinyl chloride, polyurethane, atactic polypropylene and the modified bitumen described above. Resilient layer 18 may also have a variety of different densities, weights and thicknesses, depending on the properties desired. A preferred material for resilient layer 18 is polyurethane foam on the order, for instance, of approximately 3.18mm (125 mils) in thickness. A usable urethane foam formulation is set forth in the following Example 4. (Textile Rubber & Chemical Company is located at 1300 Tiarco Drive, Dalton, Georgia.)

**Example 4 -- Resilient Layer**

| Component | Parts |
|---|---|
| Textile Rubber and Chemical Co. FP-C433 polyol | 6.05 |
| Textile Rubber and Chemical Co. C-344 KD isocyanate | 1 |

**G. Fabric Backing**

Fabric backing 22 may be selected from a wide variety of conventional synthetic and natural backing materials, including various woven and non-woven fabrics. A preferred material for backing 22 is ActionBac® 3872 woven polypropylene carpet backing available from Amoco Corporation.

Flooring 10 has good physical properties. Among them:

- wear resistance is good
- stain resistance is good
- soil resistance is excellent
- flame resistance is good
- smoke emission is low
- resilience is comparable to conventional commercial carpet
- liquid permeability is essentially zero
- "cleanability" is excellent; the produce is "moppable"
- stability is good, particularly when using polyester family fibers
- sound attenuation is good (better than conventional hard surface flooring).

**IV. Alternative Embodiments**

**A. Flooring Structure**

Fig. 3 illustrates a section of flooring or flooring tile 110 of this invention comprising a woven fabric top layer 12 bonded to a stabilizing substrate 114, which is in turn bonded to a secondary or resilient backing 115 that might, for instance, be a latex or urethane foam or a solid polyvinyl chloride layer within which additional materials such as fillers and additional strengthening, stiffening and stabilizing layers of fiberglass or other materials may also be incorporated.

In each flooring structure 110 of this invention, the fabric 12 is woven, typically utilizing nylon, polypropylene or polyester yarns, and preferably on a computer controlled Jacquard loom.

**B. Flooring Production**

Fig. 4 is a side elevation, schematized view of apparatus for producing a "face cloth" 118 in accordance with this invention. Face cloth 118 has a woven fabric 112 bonded to a stabilizing substrate or layer 114 with polyvinyl chloride adhesive 128. A roll 120 of woven fabric 112 is unwound into an accumulator 122 and travels from there to a conveyor belt 124 on which woven fabric 112 lies as it moves from left to right in Fig. 2. Meanwhile, stabilizing layer 114 is unwound from roll 26 and initially travels right to left in Fig. 4 in order for a layer of polyvinyl chloride 128 to be applied to it by a vinyl applicator 130. Vinyl 128 may typically be applied to stabilizing layer 114 in a layer approximating 170 to 3390 $g/m^2$ (5 to 100 ounces per square yard), preferably 339 to 1700 $g/m^2$ (10 to 50 ounces per square yard), and most preferably 678 to 1020 $g/m^2$ (20 to 30 ounces per square yard). Stabilizing layer 114 with polyvinyl chloride 128 applied thereto is married to woven fabric 12 by, for instance, pinching stabilizing layer 114 and woven fabric 12 between a roller 132 and conveyor belt 124. The thus-married composite of woven fabric 12 and stabilizing layer 114 with polyvinyl chloride 128 there between then passes through a heating zone 134 and a cooling zone 136 to produce composite face cloth 118 that may be accumulated in a roll 138.

An alternative laminated flooring 140 may be produced as is illustrated in Fig. 5. Flooring 140 includes a woven fabric 12 bonded to a fiberglass layer 142 utilizing urethane-modified bitumen 156. Fiberglass layer 142 is in turn bonded with polyurethane foam 146 to a secondary backing 144 (such as a woven polypropylene backing like Action-Bac® secondary backing available from Amoco Corporation).

As may be seen in Fig. 5, woven fabric 12 travels left to right and may pass through a pre-conditioning stage 148 where woven fabric 12 is subjected to preconditioning by heating and or steaming to normalize or pre-shrink the material. Fiberglass layer 142, which may typically be a woven or non-woven fleece or net substrate, also travels left to right at the same time that backing 144 moves in the same direction. Backing 144 passes onto a conveyor belt 150 where polyurethane foam 146 is deposited and gauged with a roller, knife, doctor blade or other gauging means 152 to provide a polyurethane foam layer of desired thickness. Backing 144 with polyurethane layer 146 is then brought into contact with fiberglass layer 142, which can occur on conveyor belt 150 or, as is illustrated in Fig. 5, may occur on a second conveyor belt 154. Urethane-modified bitumen adhesive 156 is then deposited on fiberglass layer 142, and woven fabric 12 is pressed into contact with adhesive 156 under lamination rollers 158 to bond woven fabric 12 to fiberglass layer 142. Some of the adhesive material 156 may also be forced through fiberglass layer 142 into contact with polyurethane foam 146 on backing layer 144. Alternatively, polyurethane foam 146 contacts fiberglass layer 142 while foam 146 is still tacky, thereby bonding to layer 142. Woven fabric 12, fiberglass layer 142, foam 146 and backing layer 144 are then bonded into a composite flooring structure 140.

Urethane-modified bitumen adhesive 156 may be a bitumen modified to possess thermosetting properties, such as bitumens including a thermosetting amount of, e.g., a hydroxyl-terminated polybutadienepolyisocyanate urethane polymer. Typical suitable urethane-modified bitumen adhesives are disclosed in U.S. Patent No. 5,096,7164 to Terry *et al* and described above.

Fig. 7 illustrates a cross section of the composite flooring structure 140 manufactured as illustrated in Fig. 5. Woven top cloth layer 12 is bonded to fiberglass stabilizing layer 142 with urethane-modified bitumen 156. Fiberglass 142 lies above polyurethane foam resilient layer 146 and is backed with a woven polypropylene secondary backing layer 144.

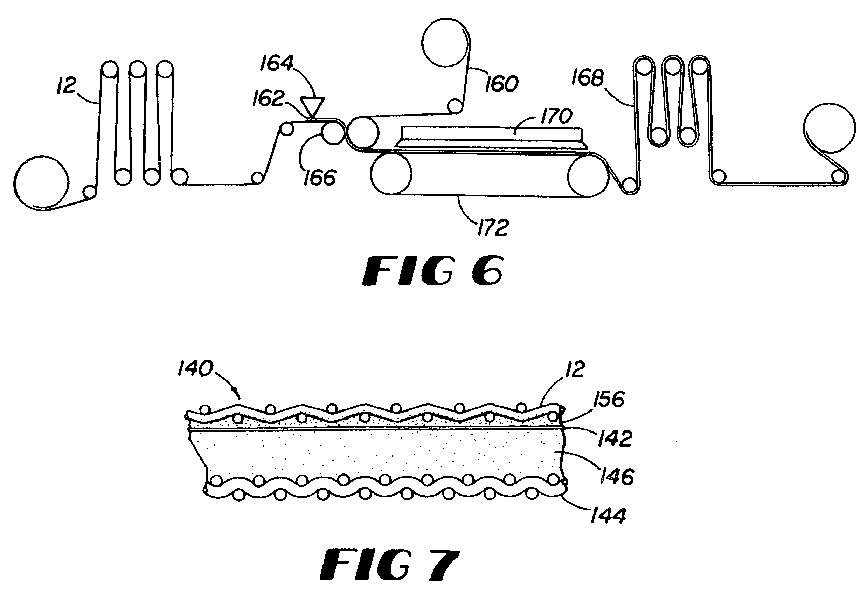

An alternative face cloth production technique is illustrated in Fig. 6, where woven fabric 12 is bonded to stabilizing substrate 160 with hot melt adhesive 162. Woven fabric 12 travels left to right in Fig. 6, where it passes under a hot melt adhesive applicator 164. Meanwhile, stabilizing substrate 160 initially travels down and right to left in Fig. 6, where it is married to woven fabric 12 with hot melt adhesive 162. This marriage occurs as woven fabric 12, hot melt adhesive 162 and stabilizing substrate 160 pass between laminating rollers 166. Hot melt adhesive laminated face cloth 168 than travels through a cooling zone 170, where it may travel on top of a conveyor belt 172. After hot melt adhesive 162 is adequately solidified, face cloth 168 may be rolled or, alternatively, pass directly into additional processing apparatus that may, for instance, bond a secondary backing thereto. Hot melt adhesive 162 may be typically a nylon, polypropylene, polyester, acrylic or bitumen-based adhesive, and stabilizing substrate 160 may be of glass, polypropylene, nylon, natural fiber or polyester.

**Claims**

1.   A floor covering having a woven fabric top layer (12), a resilient layer (18, 115, 146) positioned below the fabric top layer (12) and an additional layer (20, 114, 142) between the fabric top layer and the vesilient layer; **characterised in that** the floor covering is a dimensionally stable composite wherein the additional layer is a stabilizing layer (20, 114, 142) bonded between the woven fabric top layer (12) and the resilient layer (18, 115, 146) and the material for the stabilizing layer is selected from the group comprising fiberglass; non-woven fiberglass fleece; ceramic fibers, polyester, a PET/polyester blend or a PET/nylon blend; glass, polypropylene, nylon.

2.   A floor covering as claimed in claim 1 and further **characterised in that** the woven fabric top layer (12) comprises polyester yarn (13, 15).

3.   A floor covering as claimed in claim 2 **and further characterised in that** the polyester is selected from the group of polyethylene terephthalate, polybutylene terephthalate, poly(trimethylene terephthalate), poly(1,4-dimethylenecyclohexane terephthalate), poly(ethylene 2,6-naphthalene-dicarboxylate), and polylactic acid.

4.   A floor covering as claimed in claim 2 **and further characterised in that** the polyester yarn (13, 15) comprises PTT yarn.

5.   A floor covering as claimed in any of claims 1 to 4 **and further characterised in that** the woven fabric top layer (12) comprises yarn (13, 15) of 600 to 3600 total yarn denier having 8 to 80 denier per filament or yarns of 600 and 2400 total yarn denier having 20 denier per filament.

6.   A floor covering as claimed in any of claims 1 to 5 **and further characterised in that** it comprises a precoat layer (14) between the woven fabric top layer (12) and the backing layer (18,115).

7. A floor covering as claimed in claim 6 and further **characterised in that** the precoat (14) comprises highly frothed ethylene vinyl acetate or acrylic latex.

8. A floor covering as claimed in claim 6 or 7 and further **characterised in that** the precoat (14) is formed by applying a highly frothed ethylene vinyl acetate or acrylic latex to the underside of the woven fabric top layer (12).

9. A floor covering as claimed in claim 6, 7 or 8 and further **characterised in that** the precoat (14) contains an antimicrobial.

10. A floor covering as claimed in claim 9 **and further characterised in that** the antimicrobial comprises a phosphorus amine antimicrobial.

11. A floor covering as claimed in any of claims 6 to 10 **and further characterised in that** the precoat layer (14) comprises a base latex, water, a foaming agent, a thickener and a flame retardant.

12. A floor covering as claimed in any of claims 1 to 11 and further **characterised in that** stabilizing layer (20, 114, 142) is a fiberglass fleece weighing approximately 44.1 g/m2 (1.3 ounces per square yard).

13. A floor covering as claimed in any of claims 1 to 12 **and further characterised in that** it comprises a backing layer (16) positioned between the fabric top layer (12) and the stabilizing layer (20).

14. A floor covering as claimed in claim 13 and further **characterised in that** the resilient layer (18) comprises polyurethane or latex or urethane foam or solid polyvinyl chloride.

15. A floor covering as claimed in any of claims 1 to 14 **and further characterised in that** it comprises a backing fabric (22, 144) positioned under the stabilizing layer (20, 142).

16. A floor covering as claimed in claim 15 and **further characterised in that** the backing fabric (22, 144) comprises woven polypropylene carpet backing.

17. A floor covering as claimed in any of claims 1 to 16 and further **characterised in that** the woven top cloth (12) is bonded to the stabilizing layer (142) by a urethane-modified bitumen adhesive (156).

18. A floor covering as claimed in claim 17 and **further characterised in that** the backing layer (16) weighs between approximately 339 to 2034 g/m$^2$ (10 to 60 ounces per square yard).

19. A floor covering as claimed in any of claims 14 to 18 and further **characterised in that** the fabric top layer (12) comprises polyester yarn (13, 15), the backing layer (16) comprises urethane modified bitumen, the backing fabric (22) comprises woven polypropylene carpet backing, the resilient layer (18) comprises polyurethane foam positioned below the urethane modified bitumen backing layer and the stabilizing layer (20) is a fiberglass fleece web positioned generally between the urethane modified bitumen backing layer and the polyurethane foam resilient layer.

20. A floor covering as claimed in claim 19 **and further characterised in that** of latex precoat (14) is positioned on the underside of the fabric top layer (12) and contains an antimicrobial.

21. A method of manufacturing a floor covering having a woven fabric top layer (12), a resilient layer (18, 115, 146) positioned below the fabric top layer and an additional layer (20, 114, 142) between the fabric top layer and the resilient layer **characterised by the steps of:-**

 i) bonding the additional layer as a stabilizing layer (20, 114, 142) to the resilient layer (18, 115, 146);
 ii) bonding the fabric top layer (12) to the stabilizing layer;
 and,
 iii) timing step ii) relative to step i) so that the composite of fabric top layer, stabilizing layer and resilient layer is dimensionally stable.

22. The method of claim 21 **and further characterised by the steps of:-**

(e) forming a backing layer (18);
(f) bonding the backing layer to a backing fabric (22) ;
and,
(g) positioning the stabilizing layer (20) between the resilient layer (16) and the backing layer, prior to bonding together the fabric top layer (12), the backing fabric and backing layer.

**23.** The method of claim 26 **and further characterised in that** the resilient layer (18, 115, 146) comprises polyurethane foam.

**24.** The method claim 23 or claim 24 and further **characterised in that** the stabilizing layer (20) comprises non-woven fiberglass fleece.

**25.** The method of any of claims 21 to 24 and further **characterised by** step of applying a precoat (14) to the fabric top layer (12) before bonding the fabric top layer to the resilient layer (18, 115).

**26.** The method of claim 25 and further **characterised by** the step of incorporating an antimicrobial in the precoat (14).

**27.** The method of any of any of claims 21 to 26 and further **characterised in that** the backing fabric (22) comprises woven polypropylene.

**28.** The method of any of any of claims 21 to 27 and further **characterised in that** the backing layer (16) comprises urethane modified bitumen.

**29.** The method of any of any of claims 21 to 28 **and further characterised by the steps of:**

cutting the floor covering (10, 110, 140) into sections;
positioning the sections of floor covering so as to completely cover a floor area to be covered, with edges of adjacent sections of floor covering abutting;
applying adhesive between the underside of the floor covering sections and the floor;
applying fabric edge sealer to adjacent fabric top layer edges;
applying carpet seam sealer to at least adjacent carpet backing edges; and,
with the floor covering sections positioned on the floor with edges positioned in abutting relationship, permitting the adhesive, seam sealer and fabric edge sealer to cure.

**30.** The method of claim 29 and further **characterised in that** the fabric edge sealer is a polyester urethane.


**Patentansprüche**

**1.** Fußbodenbelag, der eine obere Webschicht (12) aus textilem Flächengebilde, eine elastische Schicht (18, 115, 146), die unter der oberen textilen Flächengebildeschicht (12) positioniert ist, und eine zusätzliche Schicht (20, 114, 142) zwischen der oberen textilen Flächengebildeschicht und der elastischen Schicht hat,
**dadurch gekennzeichnet, dass**
der Fußbodenbelag ein dimensionsmäßig stabiles Verbundmaterial ist, wobei die zusätzliche Schicht eine Stabilisierungsschicht (20, 114, 142) ist, die zwischen der oberen Webschicht (12) aus textilem Flächengebilde und der elastischen Schicht (18, 115, 146) verbunden ist, und das Material für die Stabilisierungsschicht aus der Gruppe ausgewählt ist, die besteht aus Glasfaser; Glasfaservlies; Keramikfasern, Polyester, einem PET-/Polyester-Gemisch oder einem PET-/Nylon-Gemisch; Glas, Polypropylen, Nylon.

**2.** Fußbodenbelag nach Anspruch 1,
**ferner dadurch gekennzeichnet, dass**
die Webschicht (12) aus textilem Flächengebilde Polyestergarn aufweist.

**3.** Fußbodenbelag nach Anspruch 2,
ferner **dadurch gekennzeichnet, dass**
das Polyester aus der folgenden Gruppe ausgewählt ist: Polyethylenterephthalat, Polybutylenterephthalat, Poly(trimethylenterephthalat), Poly(1,4-dimethylencyclohexanterephthalat), Poly(ethylen-2,6-Naphthalendicarboxylat) und Polylactidsäure.

**4.** Fußbodenbelag nach Anspruch 2,
ferner **dadurch gekennzeichnet, dass**
das Polyestergarn (13, 15) PTT-Garn aufweist.

**5.** Fußbodenbelag nach einem der Ansprüche 1 bis 4,
**ferner dadurch gekennzeichnet, dass**
die obere Webschicht (12) aus textilem Flächengebilde Garn (13, 15) von 600 bis 3600 Gesamtgarn-Denier mit 8 bis 80 Denier pro Filament oder Garne von 600 und 2400 Gesamtgarn-Denier mit 20 Denier pro Filament aufweist.

**6.** Fußbodenbelag nach einem der Ansprüche 1 bis 5,
**ferner dadurch gekennzeichnet, dass**
er eine Precoat-Schicht (14) zwischen der oberen Webschicht (12) aus textilem Flächengebilde und der Trägerschicht (18, 115) aufweist.

**7.** Fußbodenbelag nach Anspruch 6,
ferner **dadurch gekennzeichnet, dass**
das Precoat (14) hochgeschäumtes Ethylenvinylacetat oder Acryllatex aufweist.

**8.** Fußbodenbelag nach Anspruch 6 oder 7,
**ferner dadurch gekennzeichnet, dass**
das Precoat (14) durch Aufbringen eines hochgeschäumten Ethylenvinylacetats oder Acryllatex auf die Unterseite der oberen Webschicht (12) aus textilem Flächengebilde gebildet ist.

**9.** Fußbodenbelag nach Anspruch 6, 7 oder 8,
**ferner dadurch gekennzeichnet, dass**
das Precoat (14) ein antimikrobielles Mittel aufweist.

**10.** Fußbodenbelag nach Anspruch 9,
ferner **dadurch gekennzeichnet, dass**
das antimikrobielle Mittel ein antimikrobielles Phosphoramin aufweist.

**11.** Fußbodenbelag nach einem der Ansprüche 6 bis 10,
**ferner dadurch gekennzeichnet, dass**
die Precoat-Schicht (14) ein Basislatex, Wasser, ein Schäumungsmittel, ein Verdickungsmittel und ein Flammschutzmittel aufweist.

**12.** Fußbodenbelag nach einem der Ansprüche 1 bis 11,
**ferner dadurch gekennzeichnet, dass**
die Stabilisierungsschicht (20, 114, 142) ein Glasfaservlies ist, das ungefähr 44,1 g/m$^2$ (1,3 ounces per square yard) wiegt.

**13.** Fußbodenbelag nach einem der Ansprüche 1 bis 12,
**ferner dadurch gekennzeichnet, dass**
er eine Unterstützungs- bzw. Trägerschicht (16) aufweist, die zwischen der oberen textilen Flächengebildeschicht (12) und der Stabilisierungsschicht (20) positioniert ist.

**14.** Fußbodenbelag nach Anspruch 13,
**ferner dadurch gekennzeichnet, dass**
die elastische Schicht (18) Polyurethan oder Latex oder Urethanschaum oder festes Polyvinylchlorid aufweist.

**15.** Füßbodenbelag nach einem der Ansprüche 1 bis 14,
ferner **dadurch gekennzeichnet, dass**
er ein textiles Träger-Flächengebilde (22, 144) aufweist, das unter der Stabilisierungsschicht (20, 142) positioniert ist.

**16.** Fußbodenbelag nach Anspruch 15,
**ferner dadurch gekennzeichnet, dass**
das textile Träger-Flächengebilde (22, 144) einen gewebten Polypropylen-Teppichrücken aufweist.

**17.** Fußbodenbelag nach einem der Ansprüche 1 bis 16,
**ferner dadurch gekennzeichnet, dass**
der gewebte obere Stoff (12) mit der Stabilisierungsschicht (142) durch einen urethanmodifizierten Bitumenklebstoff (156) verbunden ist.

**18.** Fußbodenbelag nach Anspruch 17,
**ferner dadurch gekennzeichnet, dass**
die Trägerschicht (16) zwischen ungefähr 339 bis 2034 g/m$^2$ (10 bis 60 ounces per square yard) wiegt.

**19.** Fußbodenbelag nach einem der Ansprüche 14 bis 18,
ferner **dadurch gekennzeichnet, dass**
die obere textile Flächengebildeschicht (12) Polyestergarn (13, 15) aufweist, die Trägerschicht (16) urethanmodifiziertes Bitumen aufweist, das textile Träger-Flächengebilde (22) gewebten Polypropylen-Teppichrücken aufweist, die elastische Schicht (18) Polyurethanschaum aufweist, der unter der urethanmodifizierten Bitumenträgerschicht positioniert ist, und die Stabilisierungsschicht (20) eine Glasfaservliesbahn ist, die im allgemeinen zwischen der urethanmodifizierten Bitumenträgerschicht und der elastischen Polyurethanschaumschicht positioniert ist.

**20.** Fußbodenbelag nach Anspruch 19,
ferner **dadurch gekennzeichnet, dass**
das Latex-Precoat (14) an der Unterseite der oberen textilen Flächengebildeschicht (12) positioniert ist und ein antimikrobielles Mittel enthält.

**21.** Verfahren zum Herstellen eines Fußbodenbelag, der eine obere Webschicht (12) aus textilem Flächengebilde, eine elastische Schicht (18, 115, 146), die unter der oberen textilen Flächengebildeschicht positioniert ist, und eine zusätzliche Schicht (20, 114, 142) zwischen der oberen textilen Flächengebildeschicht und der elastischen Schicht hat,
**gekennzeichnet durch**
die folgenden Schritte:

i) Verbinden der zusätzlichen Schicht als eine Stabilisierungsschicht (20, 114, 142) mit der elastischen Schicht (18, 115, 146);
ii) Verbinden der oberen textilen Flächengebildeschicht (12) mit der Stabilisierungsschicht; und
iii) zeitliches Abstimmen von Schritt ii) relativ zu Schritt i) derart, dass das Verbundmaterial aus der oberen textilen Flächengebildeschicht, der Stabilisierungsschicht und der elastischen Schicht dimensionsmäßig stabil ist.

**22.** Verfahren nach Anspruch 21,
ferner **gekennzeichnet durch**
die folgenden Schritte:

(e) Bilden einer Trägerschicht (18);
(f) Verbinden der Trägerschicht mit einem textilen Träger-Flächengebilde (22); und
(g) Positionieren der Stabilisierungsschicht (20) zwischen der elastischen Schicht (16) und der Trägerschicht vor dem Verbinden der oberen textilen Flächengebildeschicht (12), dem textilen Träger-Flächengebilde und der Trägerschicht miteinander.

**23.** Verfahren nach Anspruch 26,
ferner **dadurch gekennzeichnet, dass**
die elastische Schicht (18, 115, 146) Polyurethanschaum aufweist.

**24.** Verfahren nach Anspruch 23 oder Anspruch 24,
**ferner dadurch gekennzeichnet, dass**
die Stabilisierungsschicht (20) Glasfaservlies aufweist.

**25.** Verfahren nach einem der Ansprüche 21 bis 24,
**ferner gekennzeichnet durch**

den folgenden Schritt:

Aufbringen eines Precoats (14) auf die obere textile Flächengebildeschicht (12) vor dem Verbinden der oberen textilen Flächengebildeschicht mit der elastischen Schicht (18, 115).

**26.** Verfahren nach Anspruch 25,
ferner **gekennzeichnet durch**
den folgenden Schritt:

Einbringen eines antimikrobiellen Mittels in das Precoat (14).

**27.** Verfahren nach einem der Ansprüche 21 bis 26,
ferner **dadurch gekennzeichnet, dass**
das textile Träger-Flächengebilde gewebtes Polypropylen aufweist.

**28.** Verfahren nach einem der Ansprüche 21 bis 27,
ferner **dadurch gekennzeichnet, dass**
die Trägerschicht (16) urethanmodifiziertes Bitumen aufweist.

**29.** Verfahren nach einem der Ansprüche 21 bis 28,
ferner **gekennzeichnet durch**
die folgenden Schritte:

- Zuschneiden des Fußbodenbelags (10, 110, 140) in Abschnitte;
- Positionieren der Abschnitte des Fußbodenbelags derart, dass eine zu belegende Bodenfläche vollständig bedeckt ist, wobei Ränder von benachbarten Abschnitten des Fußbodenbelags aneinander stoßen;
- Aufbringen von Klebstoff zwischen der Unterseite der Fußbodenbelagabschnitte und dem Boden;
- Aufbringen von Flächengebilde-Randabdichtungsmittel auf benachbarte Ränder der oberen textilen Flächengebildeschicht;
- Aufbringen von Teppichnaht-Abdichtungsmittel auf mindestens benachbarte Ränder des Teppichrückens; und wenn die Fußbodenbelagabschnitte so auf dem Boden positioniert sind, dass ihre Ränder in aneinanderstoßender Beziehung positioniert sind,
- Zulassen, dass der Klebstoff, das Nahtabdichtungsmittel und das Flächengebilde-Randabdichtungsmittel aushärten.

**30.** Verfahren nach Anspruch 29,
ferner **dadurch gekennzeichnet, dass**
das Flächengebilde-Randdichtungsmittel ein Polyesterurethan ist.

**Revendications**

**1.** Revêtement de sol ayant une couche supérieure en étoffe tissée (12), une couche élastique (18, 115, 146) positionnée au-dessous de la couche supérieure en étoffe tissée (12) et une couche supplémentaire (20, 114, 142) entre la couche supérieure en étoffe tissée et la couche élastique ; **caractérisé en ce que** le revêtement de sol est un composite dimensionnellement stable dans lequel la couche supplémentaire est une couche stabilisatrice (20, 114, 142) en liaison entre la couche supérieure en étoffe tissée (12) et la couche élastique (18, 115, 146) et le matériau pour la couche stabilisatrice est choisi dans le groupe comprenant la fibre de verre ; un molleton en fibre de verre non tissée ; les fibres céramiques, le polyester, un mélange PET/polyester ou un mélange PET/nylon ; le verre, le polypropylène, le nylon.

**2.** Revêtement de sol selon la revendication 1, et **caractérisé en outre en ce que** la couche supérieure en étoffe tissée (12) comprend du fil de polyester (13, 15).

**3.** Revêtement de sol selon la revendication 2, et **caractérisé en outre en ce que** le polyester est choisi dans le groupe comprenant le polyéthylène téréphtalate, le polybutylène téréphtalate, le poly(triméthylène téréphtalate), le poly(1,4-diméthylènecyclohexane téréphtalate), le poly(éthylène 2,6-naphtalène-dicarboxylate), et l'acide polylactique.

**4.** Revêtement de sol selon la revendication 2, et **caractérisé en outre en ce que** le fil de polyester (13, 15) comprend du fil de PTT.

**5.** Revêtement de sol selon l'une quelconque des revendications 1 à 4, et **caractérisé en outre en ce que** la couche supérieure en étoffe tissée (12) comprend du fil (13, 15) de 600 à 3 600 de denier total de fil ayant de 8 à 80 deniers par filament ou des fils de 600 et 2 400 de denier total de fil ayant 20 deniers par filament.

**6.** Revêtement de sol selon l'une quelconque des revendications 1 à 5, et **caractérisé en outre en ce qu'**il comprend une précouche (14) entre la couche supérieure en étoffe tissée (12) et la couche de support (18, 115).

**7.** Revêtement de sol selon la revendication 6, et **caractérisé en outre en ce que** la précouche (14) comprend de l'éthylène acétate de vinyle fortement mousseux ou du latex acrylique.

**8.** Revêtement de sol selon la revendication 6 ou 7, et **caractérisé en outre en ce que** la précouche (14) est formée par application d'un éthylène acétate de vinyle fortement mousseux ou d'un latex acrylique sur le dessous de la couche supérieure en étoffe tissée (12).

**9.** Revêtement de sol selon la revendication 6, 7 ou 8, et **caractérisé en outre en ce que** la précouche (14) contient un produit antimicrobien.

**10.** Revêtement de sol selon la revendication 9, et **caractérisé en outre en ce que** le produit antimicrobien comprend un produit antimicrobien d'amine de phosphore.

**11.** Revêtement de sol selon l'une quelconque des revendications 6 à 10, et **caractérisé en outre en ce que** la précouche (14) comprend un latex de base, de l'eau, un agent moussant, un épaississant et un ignifuge.

**12.** Revêtement de sol selon l'une quelconque des revendications 1 à 11, et **caractérisé en outre en ce que** la couche stabilisatrice (20, 114, 142) est un molleton en fibre de verre pesant approximativement 44,1 g/m$^2$ (1,3 onces par yard carré).

**13.** Revêtement de sol selon l'une quelconque des revendications 1 à 12, et **caractérisé en outre en ce qu'**il comprend une couche de support (16) positionnée entre la couche supérieure en étoffe tissée (12) et la couche stabilisatrice (20).

**14.** Revêtement de sol selon la revendication 13, et **caractérisé en outre en ce que** la couche élastique (18) comprend de la mousse de polyuréthanne ou de latex ou d'uréthane, ou du chlorure de polyvinyle solide.

**15.** Revêtement de sol selon l'une quelconque des revendications 1 à 14, et **caractérisé en outre en ce qu'**il comprend un tissu de support (22, 144) positionné sous la couche stabilisatrice (20, 142).

**16.** Revêtement de sol selon la revendication 15, et **caractérisé en outre en ce que** le tissu de support (22, 144) comprend un support de moquette en polypropylène tissé.

**17.** Revêtement de sol selon l'une quelconque des revendications 1 à 16, et **caractérisé en outre en ce que** l'étoffe tissée du dessus (12) est liée à la couche stabilisatrice (142) par un adhésif en bitume modifié par l'uréthane (156).

**18.** Revêtement de sol selon la revendication 17, et **caractérisé en outre en ce que** la couche de support (16) pèse entre approximativement 339 et 2 034 g/m$^2$ (10 à 60 onces par yard carré).

**19.** Revêtement de sol selon l'une quelconque des revendications 14 à 18, et **caractérisé en outre en ce que** la couche supérieure en étoffe tissée (12) comprend du fil de polyester (13, 15), la couche de support (16) comprend du bitume modifié par l'uréthane, le tissu de support (22) comprend un support de moquette en polypropylène tissé, la couche élastique (18) comprend une mousse de polyuréthanne positionnée au-dessous de la couche de support en bitume modifié par l'uréthane et la couche stabilisatrice (20) est une toile de molleton en fibre de verre positionnée généralement entre la couche de support en bitume modifié par l'uréthane et la couche élastique en mousse de polyuréthanne.

**20.** Revêtement de sol selon la revendication 19, et **caractérisé en outre en ce qu'**une précouche en latex (14) est positionnée sur le dessous de la couche supérieure en étoffe tissée (12) et contient un produit antimicrobien.

21. Procédé de fabrication d'un revêtement de sol ayant une couche supérieure en étoffe tissée (12), une couche élastique (18, 115, 146) positionnée au-dessous de la couche supérieure en tissu, et une couche supplémentaire (20, 114, 142) entre la couche supérieure en tissu et la couche élastique, **caractérisé par** les étapes consistant :

   i) à lier la couche supplémentaire en tant que couche stabilisatrice (20, 114, 142) à la couche élastique (18, 115, 146) ;
   ii) à lier la couche supérieure en étoffe tissée (12) à la couche stabilisatrice ;
   et,
   iii) à programmer l'étape ii) par rapport à l'étape i) de sorte que le composite de la couche supérieure en tissu, de la couche stabilisatrice et de la couche élastique soit dimensionnellement stable.

22. Procédé selon la revendication 21, et **caractérisé en outre par** les étapes consistant :

   (e) à former une couche de support (18) ;
   (f) à lier la couche de support à un tissu de support (22) ;
   et,
   (g) à positionner la couche stabilisatrice (20) entre la couche élastique (16) et la couche de support, avant de lier ensemble la couche supérieure en tissu (12), le tissu de support et la couche de support.

23. Procédé selon la revendication 26, et **caractérisé en outre en ce que** la couche élastique (18, 115, 146) comprend de la mousse de polyuréthanne.

24. Procédé selon la revendication 23 ou la revendication 24, et **caractérisé en outre en ce que** la couche stabilisatrice (20) comprend du molleton en fibre de verre non tissée.

25. Procédé selon l'une quelconque des revendications 21 à 24, et **caractérisé en outre par** l'étape consistant à appliquer une précouche (14) à la couche supérieure en étoffe tissée (12) avant de lier la couche supérieure en tissu à la couche élastique (18, 115).

26. Procédé selon la revendication 25, et **caractérisé en outre par** l'étape consistant à incorporer un produit antimicrobien dans la précouche (14).

27. Procédé selon l'une quelconque des revendications 21 à 26, et **caractérisé en outre en ce que** le tissu de support (22) comprend du polypropylène tissé.

28. Procédé selon l'une quelconque des revendications 21 à 27, et **caractérisé en outre en ce que** la couche de support (16) comprend du bitume modifié par l'uréthane.

29. Procédé selon l'une quelconque des revendications 21 à 28, et **caractérisé en outre par** les étapes consistant :

   à découper le revêtement de sol (10, 110, 140) en sections ;
   à positionner les sections de revêtement de sol de sorte à couvrir complètement une aire de sol destinée à être couverte, avec les bords des sections adjacentes de revêtement de sol s'aboutant ;
   à appliquer un adhésif entre le dessous des sections de revêtement de sol et le sol ;
   à appliquer un produit contre l'effilochage des bords du tissu aux bords adjacents de la couche supérieure en tissu ;
   à appliquer un produit d'étanchéification des jonctions de la moquette au moins aux bords adjacents du support de moquette ;
   et,
   avec les sections de revêtement de sol positionnées sur le sol avec les bords positionnés dans une relation d'aboutement, de sorte à permettre à l'adhésif, au produit d'étanchéification des jonctions et au produit contre l'effilochage des bords du tissu de polymériser.

30. Procédé selon la revendication 29, et **caractérisé en outre en ce que** le produit contre l'effilochage des bords du tissu est un polyester uréthane.

FIG 1

FIG 2

FIG 3

**FIG 4**

**FIG 5**

EP 1 023 485 B1

EP 1 023 485 B1

**FIG 6**

**FIG 7**